# DEMANDE DE BREVET EUROPEEN

(11) **EP 4 715 027 A1**
(43) Date de publication de la demande: **25.03.2026**
(21) Numéro de dépôt: 25203191.9
(22) Date de dépôt: 18.09.2025
(51) Int. Cl.: C09K 11/06, G01T 1/204, G21K 4/00

(54) **MELANGES EUTECTIQUES AROMATIQUES ET LEUR UTILISATION EN TANT QUE SCINTILLATEURS LIQUIDES**

(30) Priorité: 19.09.2024 FR 2409997
(71) Demandeur: Commissariat à l'Energie Atomique et aux Energies Alternatives, 75015 Paris (FR); Centre National de la Recherche Scientifique (CNRS), 75016 Paris (FR); université Clermont Auvergne, 63000 Clermont Ferrand (FR)
(72) Inventeur: VERGNORY, Pauline, 91191 GIF-SUR-YVETTE CEDEX (FR); BERTRAND, Guillaume, 91191 GIF-SUR-YVETTE CEDEX (FR); ANDANSON, Jean-Michel, 63000 Clermont-Ferrand (FR)
(74) Mandataire: Gevers & Orès

(57) **Abrégé**

La présente invention concerne des mélanges eutectiques aromatiques et polyaromatiques et leur utilisation en tant que scintillateurs liquides.

## Description

La présente invention concerne des mélanges eutectiques aromatiques et polyaromatiques et leur utilisation en tant que scintillateurs liquides.

Reposant sur la transformation d'un rayonnement ionisant en un rayonnement lumineux, la scintillation liquide est l'une des techniques de détection et de mesure des radiations les plus anciennes.

Cette méthode est actuellement l'une des techniques les plus fréquemment utilisées pour la mesure de l'activité de radionucléides émetteurs bêta purs (pour lesquels la désintégration radioactive n'est pas accompagnée de rayonnement gamma détectable par d'autres techniques). Elle est également employée pour la mesure des radionucléides se désintégrant par capture électronique ou par émission alpha. Plus particulièrement, la scintillation liquide présente un intérêt majeur pour la mesure des rayonnements bêta de faibles énergies.

La mesure d'activité par scintillation liquide repose sur la transformation du rayonnement ionisant émis lors de la désintégration d'un atome radioactif en un rayonnement lumineux détectable et quantifiable.

La scintillation liquide consiste typiquement à mélanger une aliquote de la solution à mesurer à un liquide scintillant, généralement une solution liquide contenant des scintillateurs organiques, pour détecter les radiations émises par une source radioactive. Lorsque les particules ionisantes interagissent avec le liquide, elles excitent les molécules de scintillateur qui, en se désexcitant, émettent de la lumière (photon). Cette lumière est ensuite détectée par un photomultiplicateur ou un photodétecteur, permettant de quantifier l'énergie et l'intensité du rayonnement.

Ce liquide scintillant a pour rôle de transformer l'énergie du rayonnement ionisant émis par la désintégration d'un radionucléide, en impulsions lumineuses quantifiables. Ce liquide fait appel à un composant majoritaire : un solvant organique.

La composition du liquide scintillant doit permettre d'une part (1) une parfaite miscibilité entre la matrice dans laquelle se trouve le radionucléide dont l'activité doit être mesurée et le solvant et, d'autre part, (2) un transfert efficace de l'énergie de la particule ionisante aux molécules fluorescentes, pour permettre l'émission de photons lumineux détectables par les photomultiplicateurs.

Composant principal du liquide scintillant, le solvant est généralement constitué de molécules aromatiques. Il a pour fonction d'absorber l'énergie du rayonnement ionisant et de la propager aux molécules fluorescentes. Le solvant doit être relativement inerte chimiquement.

Historiquement, les molécules employées étaient le benzène et le toluène, puis le xylène et le pseudocumène, moins toxiques.

Cependant, ces solvants sont hautement inflammables et ont tendance à s'évaporer facilement, ce qui complique leur manipulation et leur stockage et les rendent risqués. En effet, tous ces solvants organiques ont des points d'éclair (« flash point ») assez faibles, typiquement <100°C. Ceci représente un risque majeur pour les applications qui utilisent un grand volume de ces solvants, comme la scintillation liquide.

Les liquides scintillants commercialisés depuis les années 1980 font appel à des solvants de nouvelle génération : le di-isopropylnaphtalène (DIN), le phénylxylyléthane (PXE) ou le dodécylbenzène. Moins toxiques et possédant un point éclair plus élevé, ces solvants présentent cependant une stabilité chimique moindre.

Des compositions à base de molécule alcalines ou des sels de phosphonium ont également été développées pour la scintillation liquide. Cependant, ces deux familles de molécules sont connues pour être moins efficaces pour la scintillation que les compositions commerciales.

Ainsi, bien que les scintillateurs organiques liquides soient des outils précieux pour la détection des radiations, les solvants utilisés présentent des défis importants en termes de sécurité, de stabilité et de performance.

L'invention a ainsi pour but de fournir des compositions permettant de lever les inconvénients précités.

Un objectif de l'invention est de fournir des compositions peu inflammables, ayant en particulier des points d'éclair > 100 °C, diminuant les risques précités, tout en pouvant être utilisées en scintillation liquide.

Un autre objectif de l'invention est de fournir de telles compositions, lesquelles sont au moins équivalentes, voire plus efficaces que les scintillateurs commerciaux.

### OBJET DE L'INVENTION

Ainsi, selon un premier aspect, l'invention concerne une composition constituée de ou comprenant au moins deux composés choisis parmi :
- Les di-tert-butyl-benzènes;
- Les biphényles et terphényles, optionnellement substitués par deux groupes choisis indépendamment parmi les alkyles linéaires ou branchés en C₁ à C₆ ;
- Les hydrocarbures aromatiques polycycliques choisis parmi naphtalènes, acénaphtènes, anthracènes, pyrènes, lesquels sont optionnellement substitués par deux groupes choisis indépendamment parmi les alkyles linéaires ou branchés en C₁ à C₆ ;
- Les fluorènes et carbazoles, lesquels sont optionnellement substitués par deux ou quatre groupes choisis indépendamment parmi les alkyles linéaires ou branchés en C₁ à C₆ ;
- Les 2,5-diphenyloxazoles, optionnellement substitués par deux groupes choisis indépendamment parmi les alkyles linéaires ou branchés en C₁ à C₆ ;
- Les composés de formule (I) : 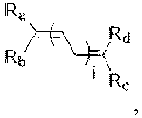 dans laquelle :
   i est égal à 0 ou 1 ;
   Rₐ, R_{b}, R_{c} et R_{d} sont indépendamment choisis parmi H et phényle, au moins deux des groupes Rₐ, R_{b}, R_{c} et R_{d} étant un phényle ;
   lesdits composés de formule (I) étant optionnellement substitués, en particulier sur les groupes phényle, par deux groupes choisis indépendamment parmi les alkyles linéaires ou branchés en C₁ à C₆ ;
ladite composition n'étant pas constituée du couple biphényle et naphtalène.

De façon surprenante, il a été mis en évidence par les Inventeurs que ces composés ont un point de fusion >60°C individuellement, mais qui une fois au sein d'une composition selon l'invention, ont un point de fusion plus bas, voire liquide à température ambiante, au sein d'un eutectique purement aromatique, voire poly-aromatiques.

Et toutes ces molécules aromatiques, voire poly-aromatiques, peuvent être utilisées avec succès en scintillation.

Selon un mode de réalisation, la composition selon l'invention est eutectique.

Selon un mode de réalisation, les au moins deux composés sont notamment choisis parmi les composés suivants : 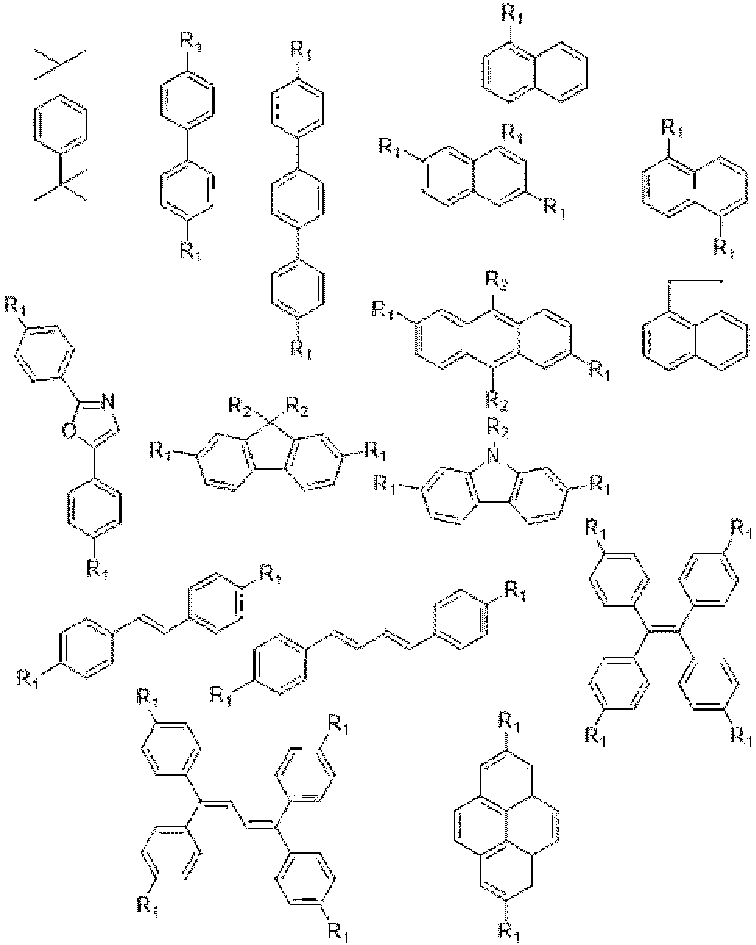
dans lesquelles R₁ et R₂ sont choisis indépendamment d'un composé à l'autre,
R₁ étant choisi parmi H et les alkyles linéaires ou branchés en C₁ à C₆, et R₂ étant choisi parmi H et les alkyles linéaires ou branchés en C₁ à C₆.

Selon un mode de réalisation, la composition de l'invention est binaire, tertiaire, quaternaire, quinquénaire et ainsi de suite selon le nombre de composants.

Selon un mode de réalisation, la composition de l'invention est binaire, tertiaire, quaternaire, quinquénaire.

Selon un mode de réalisation, la composition de l'invention est :
- binaire, et les deux composés de ladite composition sont présents dans celle-ci à hauteur de 20 à 80 %molaire, en particulier à hauteur de 40 à 60 %molaire ;
- tertiaire, et les trois composés de ladite composition sont présents dans celle-ci à hauteur de 10 à 55 %molaire, en particulier à hauteur de 25 à 40 %molaire ;
- quaternaire, et les quatre composés de ladite composition sont présents dans celle-ci à hauteur de 5 à 45 %molaire, en particulier à hauteur de 22 à 40 %molaire pour trois d'entre eux, et à hauteur de 6 à 34 %molaire pour le dernier ; ou
- quinquénaire, et les cinq composés de ladite composition sont présents dans celle-ci à hauteur de 5 à 45 %molaire.

Selon un mode de réalisation, la composition de l'invention est constituée de ou comprenant les au moins deux composés, et en sus au moins un composé décaleur de longueurs d'ondes.

Selon un autre aspect, l'invention concerne également l'utilisation d'une composition pour la scintillation liquide, ladite composition étant constituée de ou comprenant au moins deux composés choisis parmi :
- Les di-tert-butyl-benzènes;
- Les biphényles et terphényles, optionnellement substitués par deux groupes choisis indépendamment parmi les alkyles linéaires ou branchés en C₁ à C₆ ;
- Les hydrocarbures aromatiques polycycliques choisis parmi naphtalènes, acénaphtènes, anthracènes, pyrènes, lesquels sont optionnellement substitués par deux groupes choisis indépendamment parmi les alkyles linéaires ou branchés en C₁ à C₆ ;
- Les fluorènes et carbazoles, lesquels sont optionnellement substitués par au moins deux groupes choisis indépendamment parmi les alkyles linéaires ou branchés en C₁ à C₆ ;
- Les 2,5-diphenyloxazoles, optionnellement substitués par deux groupes choisis indépendamment parmi les alkyles linéaires ou branchés en C₁ à C₆ ;
- Les composés de formule (I) : 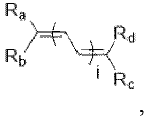 dans laquelle :
   i est égal à 0 ou 1 ;
   Rₐ, R_{b}, R_{c} et R_{d} sont indépendamment choisis parmi H et phényle, au moins deux des groupes Rₐ, R_{b}, R_{c} et R_{d} étant un phényle ;
   lesdits composés de formule (I) étant optionnellement substitués, en particulier sur les groupes phényle, par deux groupes choisis indépendamment parmi les alkyles linéaires ou branchés en C₁ à C₆.

Les compositions de l'invention sont aromatiques, voire poly-aromatiques, et peuvent être utilisées avec succès en scintillation.

Selon un mode de réalisation, l'utilisation de l'invention est une utilisation de ladite composition en tant que scintillateur liquide.

Selon un mode de réalisation, ladite composition est constituée de ou comprenant les au moins deux composés, et en sus au moins un composé décaleur de longueurs d'ondes.

Selon un mode de réalisation, ladite composition est dénuée de solvant, le solvant étant différent de tous les composés définis précédemment et de leurs mélanges.

### DESCRIPTION DETAILLEE DE L'INVENTION

### Définitions

Tel qu'on l'entend ici, les plages de valeur sous forme de « x-y » ou « de x à y » ou « entre x et y » incluent les bornes x et y ainsi que les entiers compris entre ces bornes, et les nombres réels positifs compris entre ces bornes et/ou entiers. A titre d'exemple, « 1-5 », ou « de 1 à 5 » ou « entre 1 et 5 » désignent les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'il est utilisé ici, le terme "alkyle" désigne un groupe alkyle à chaîne linéaire ou ramifiée, ayant le nombre d'atomes de carbone indiqué avant ledit terme, notamment 1 à 4 atomes de carbone, tel que méthyle, éthyle, propyle, isopropyle, butyle, isobutyle, sec-butyle, tert-butyle, etc. Ainsi, une expression telle que "alkyle en C₁ à C₄" désigne un radical alkyle contenant de 1 à 4 atomes de carbone.

Par « ladite composition n'est pas constituée de biphényle et naphtalène », on entend notamment que ladite composition n'est pas un mélange constitué de biphényle non substitué et de naphtalène non substitué. En particulier, ladite composition n'étant pas constituée de biphényle, optionnellement substitué par deux groupes choisis indépendamment parmi les alkyles linéaires ou branchés en C₁ à C₆, et de naphtalène, optionnellement substitué par deux groupes choisis indépendamment parmi les alkyles linéaires ou branchés en C₁ à C₆.

Les compositions de l'invention sont des eutectiques.

Par « eutectique », on entend notamment un mélange de deux ou plusieurs substances qui a une température de fusion plus basse que celle de chacune des substances individuelles.

Le di-tert-butyl-benzène est notamment le 1,4-di-tert-butyl-benzène.

Les biphényle et terphényles sont notamment le biphényle ou le para-terphényle.

Les biphényles optionnellement substitués sont notamment de formule suivante : 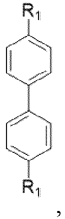 dans laquelle R₁ est choisi parmi H et les alkyles linéaires ou branchés en C₁ à C₆.

Les terphényles optionnellement substitués sont notamment de formule suivante : 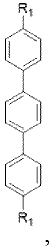 dans laquelle R₁ est choisi parmi H et les alkyles linéaires ou branchés en C₁ à C₆.

Les naphtalènes optionnellement sont notamment d'une des formules suivantes : 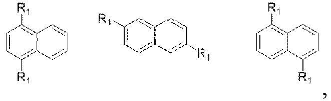 dans laquelle R₁ est choisi parmi H et les alkyles linéaires ou branchés en C₁ à C₆.

L'acénaphtène est notamment non substitué.

Les anthracènes optionnellement substitués sont notamment de formule suivante : 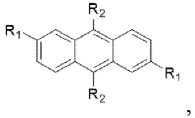 dans laquelle R₁ est choisi parmi H et les alkyles linéaires ou branchés en C₁ à C₆, et R₂ est choisi parmi H et les alkyles linéaires ou branchés en C₁ à C₆.

Les pyrènes optionnellement sont notamment de formule suivante : 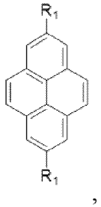 dans laquelle R₁ est choisi parmi H et les alkyles linéaires ou branchés en C₁ à C₆.

Les 2,5-diphenyloxazoles optionnellement sont notamment de formule suivante : 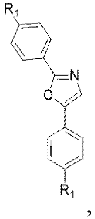 dans laquelle R₁ est choisi parmi H et les alkyles linéaires ou branchés en C₁ à C₆.

Les fluorènes optionnellement substitués sont notamment de formule suivante : 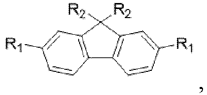 dans laquelle R₁ est choisi parmi H et les alkyles linéaires ou branchés en C₁ à C₆, et R₂ est choisi parmi H et les alkyles linéaires ou branchés en C₁ à C₆.

Les carbazoles optionnellement substitués sont notamment de formule suivante : 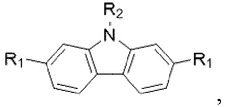 dans laquelle R₁ est choisi parmi H et les alkyles linéaires ou branchés en C₁ à C₆, et R₂ est choisi parmi H et les alkyles linéaires ou branchés en C₁ à C₆.

Les composés de formule (I) sont notamment choisis parmi les 1,2-diphényléthènes, 1,1,2,2-tetraphényléthènes, 1,2-diphénylbutadiènes, 1,1,4,4-tetraphénylbutadiènes, optionnellement substitués, en particulier sur les groupes phényle, par deux groupes choisis indépendamment parmi les alkyles linéaires ou branchés en C₁ à C₆.

Les 1,2-diphényléthènes optionnellement sont notamment de formule suivante : 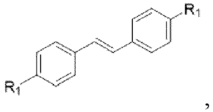 dans laquelle R₁ est choisi parmi H et les alkyles linéaires ou branchés en C₁ à C₆.

Les 1,1,2,2-tetraphényléthènes optionnellement sont notamment de formule suivante : 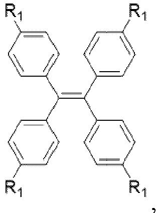 dans laquelle R₁ est choisi parmi H et les alkyles linéaires ou branchés en C₁ à C₆.

Les 1,2-diphénylbutadiènes optionnellement sont notamment de formule suivante : 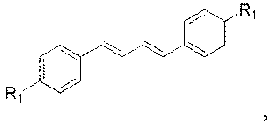 dans laquelle R₁ est choisi parmi H et les alkyles linéaires ou branchés en C₁ à C₆.

Les 1,1,4,4-tetraphénylbutadiènes optionnellement sont notamment de formule suivante : 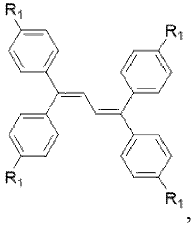 dans laquelle R₁ est choisi parmi H et les alkyles linéaires ou branchés en C₁ à C₆.

La composition selon l'invention peut être une composition dans laquelle les aux moins deux composés sont d'une même formule telle que définie précédemment, différant uniquement de par la signification du groupe R₁ et/ou R₂.

Selon un mode de réalisation particulier, la composition selon l'invention est constituée d'au moins deux composés tels que définis précédemment.

La composition, en particulier l'eutectique, selon l'invention, peut être binaire (à deux composants), tertiaire (à trois composants), quaternaire (à quatre composants), quinquénaire (à cinq composants, et ainsi de suite.

Selon un mode de réalisation, la composition de l'invention est tertiaire, quaternaire, ou quinquénaire. Ceci est susceptible de permettre l'obtention, si désiré, de compostions à la température de fusion plus basse, par exemple bien plus basse que la température ambiante.

Selon un mode de réalisation particulier, la composition est constituée de ou comprend :
- un biphényle, optionnellement substitué par deux groupes choisis indépendamment parmi les alkyles linéaires ou branchés en C₁ à C₆, en particulier le biphényle ; et
- un 2,5-diphenyloxazole, optionnellement substitué par deux groupes choisis indépendamment parmi les alkyles linéaires ou branchés en C₁ à C₆, en particulier le 2,5-diphenyloxazole.

Selon un mode de réalisation particulier, la composition est constituée de ou comprend :
- un biphényle, optionnellement substitué par deux groupes choisis indépendamment parmi les alkyles linéaires ou branchés en C₁ à C₆, en particulier le biphényle ;
- un 2,5-diphenyloxazole, optionnellement substitué par deux groupes choisis indépendamment parmi les alkyles linéaires ou branchés en C₁ à C₆, en particulier le 2,5-diphenyloxazole ; et
- un carbazole, optionnellement substitué par deux groupes choisis indépendamment parmi les alkyles linéaires ou branchés en C₁ à C₆, en particulier le 9-éthylcarbazole.

Selon un mode de réalisation particulier, la composition est constituée de ou comprend :
- un biphényle, optionnellement substitué par deux groupes choisis indépendamment parmi les alkyles linéaires ou branchés en C₁ à C₆, en particulier le biphényle ;
- un 2,5-diphenyloxazole, optionnellement substitué par deux groupes choisis indépendamment parmi les alkyles linéaires ou branchés en C₁ à C₆, en particulier le 2,5-diphenyloxazole ;
- un carbazole, optionnellement substitué par deux groupes choisis indépendamment parmi les alkyles linéaires ou branchés en C₁ à C₆, en particulier le 9-éthylcarbazole ; et
- un diterbutylbenzène, en particulier le 1,4- Diterbutylbenzène, un deuxième biphényle, optionnellement substitué par deux groupes choisis indépendamment parmi les alkyles linéaires ou branchés en C₁ à C₆, différent du premier, en particulier le diterbutylbiphényle, et/ou un fluorène, en particulier le diterbutylfluorène.

La composition de l'invention peut comprendre en sus au moins un composé décaleur de longueurs d'ondes.

Selon un mode de réalisation particulier, le au moins un composé décaleur de longueurs d'ondes est choisi parmi les composes suivants, et leurs mélanges: POPOP, 9-10 DPA, Bis-MSB, Coumarine-6.

Ces composés sont de formule suivante:

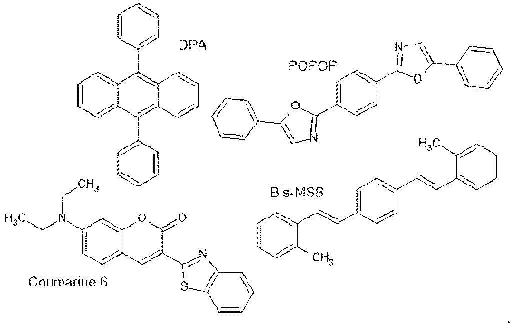

Selon un mode de réalisation particulier, le au moins un composé décaleur de longueurs d'ondes est présent dans la composition à hauteur de 0,01 % à 0,3 % en masse par rapport à la masse totale de composition, en particulier de 0,03 % à 0,1 % en masse.

Selon un autre aspect, l'invention concerne également une composition constituée de ou comprenant au moins deux composés choisis parmi :
- Les di-tert-butyl-benzènes;
- Les biphényles et terphényles, optionnellement substitués par deux groupes choisis indépendamment parmi les alkyles linéaires ou branchés en C₁ à C₆ ;
- Les hydrocarbures aromatiques polycycliques choisis parmi naphtalènes, acénaphtènes, anthracènes, pyrènes, lesquels sont optionnellement substitués par deux groupes choisis indépendamment parmi les alkyles linéaires ou branchés en C₁ à C₆ ;
- Les fluorènes et carbazoles, lesquels sont optionnellement substitués par deux ou quatre groupes choisis indépendamment parmi les alkyles linéaires ou branchés en C₁ à C₆ ;
- Les 2,5-diphenyloxazoles, optionnellement substitués par deux groupes choisis indépendamment parmi les alkyles linéaires ou branchés en C₁ à C₆ ;
- Les composés de formule (I) : 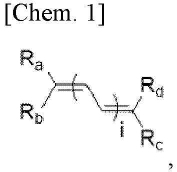 dans laquelle :
   i est égal à 0 ou 1 ;
   Rₐ, R_{b}, R_{c} et R_{d} sont indépendamment choisis parmi H et phényle, au moins deux des groupes Rₐ, R_{b}, R_{c} et R_{d} étant un phényle ;
   lesdits composés de formule (I) étant optionnellement substitués, en particulier sur les groupes phényle, par deux groupes choisis indépendamment parmi les alkyles linéaires ou branchés en C₁ à C₆ ;
et en sus au moins un composé décaleur de longueurs d'ondes.

La composition de l'invention peut ainsi également comprendre en sus au moins un fluorophore secondaire (ou décaleur en longueurs d'ondes).

Ces fluorophores secondaires sont bien connus de l'homme du métier.

Selon un mode de réalisation particulier, le au moins un fluorophore secondaire est choisi parmi POPOP, BisMSB, 9-10 DPA, Coumarine 6.

Selon un mode de réalisation particulier, le au moins un fluorophore secondaire est présent dans la composition à hauteur de 0,01 à 0,3% en masse.

Selon un autre aspect, l'invention concerne également, l'utilisation d'une composition telle que décrite précédemment pour la scintillation liquide, notamment en tant que scintillateur liquide.

Tous les modes de réalisation définis précédemment à propos de la composition de l'invention s'appliquent également ici, seuls ou en combinaisons.

Selon un mode de réalisation particulier, ladite composition n'étant pas constituée de biphényle et naphtalène. En effet, leur eutectique binaire peut ne pas avoir un point de fusion assez bas suivant l'utilisation visée.

### FIGURES

La figure 1 montre les spectres d'aire d'impulsion des eutectiques T_{A}, Q_{A}, Q_{B} et Q_{C} de l'exemple 1 sous irradiation avec une source de ¹³⁷Cs (exemple 2).
La figure 2 montre les spectres d'aire d'impulsion des eutectiques T_{A}, Q_{A}, Q_{B} et Qc avec POPOP de l'exemple 1 sous irradiation avec une source de ¹³⁷Cs (exemple 2).
La figure 3 est une comparaison selon l'exemple 3 du spectre d'aire entre un scintillateur liquide commercial de référence hors invention (BC501A) et deux eutectiques liquides scintillants T_{A} et Q_{A} de l'exemple 1, en présence de POPOP (T_{A}+POPOP et Q_{A}+POPOP de l'exemple 2).

### EXEMPLES

### Exemple 1 : Préparation de compositions selon l'invention

Les mélanges binaire B_{A}, ternaire T_{A}, et quaternaires Q_{A} Q_{B} et Q_{C} ont été préparés et caractérisés comme suit.

La température de fusion des mélanges a été déterminée par Calorimétrie Différentielle à Balayage (DSC).

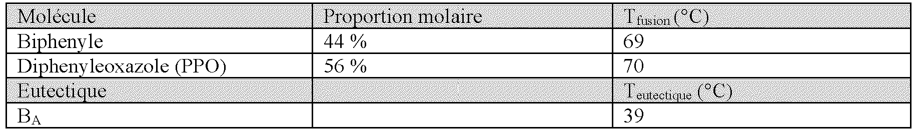

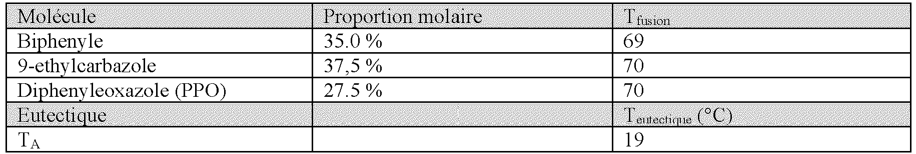

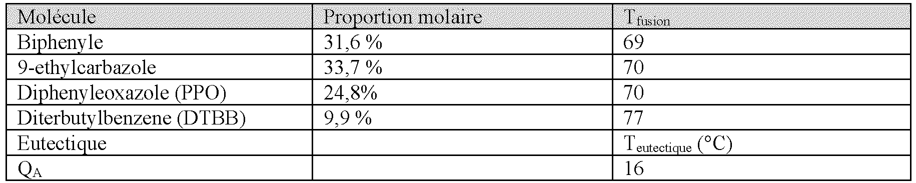

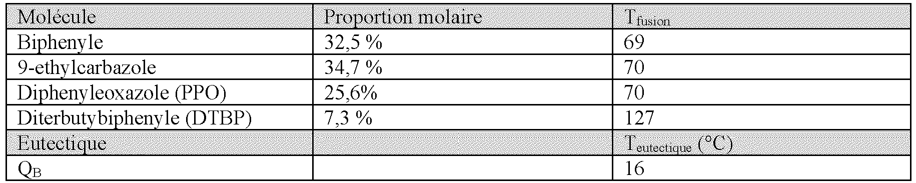

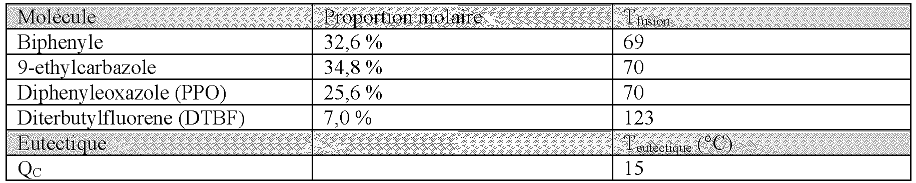

### Exemple 2 : Utilisation des compositions selon l'invention en tant que scintillateurs liquides

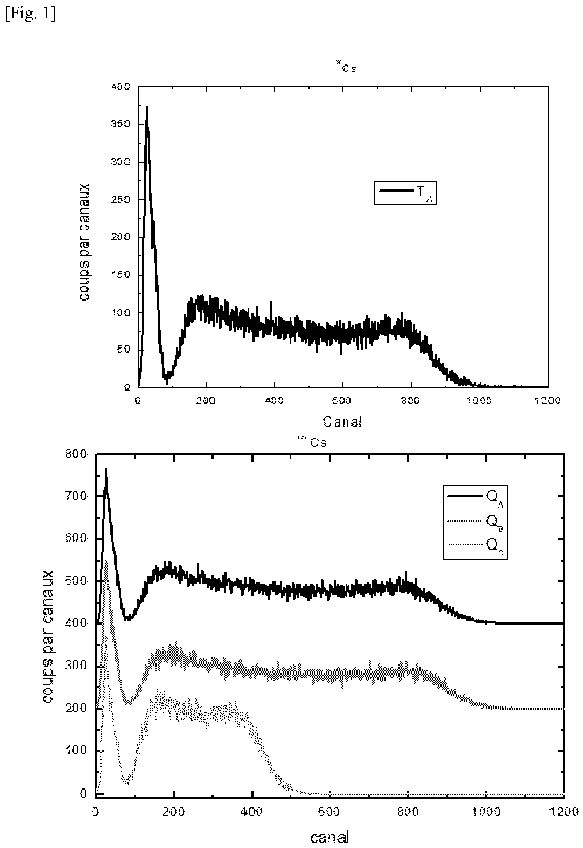

Les mélanges de l'exemple 1 ont été mis en œuvre en tant que scintillateurs liquides. Les mélanges T_{A}, Q_{A}, Q_{B}, et Q_{C} ont notamment été exposés comme suit :
Les spectres d'aires présentés dans cette exemple (figure 1) ont été réalisés en mettant 10g du mélange eutectique ciblée dans un flacon en verre. Le flacon est alors recouvert d'un matériau réfléchissant (bande PTFE) sur chaque face sauf une. La face libre est alors mise en contact avec un photomultiplicateur relié a une électronique de mesure de scintillation standard.

La figure 1 montrent que les mélanges étudiés sont tous utilisés en tant que scintillateurs liquides avec succès.

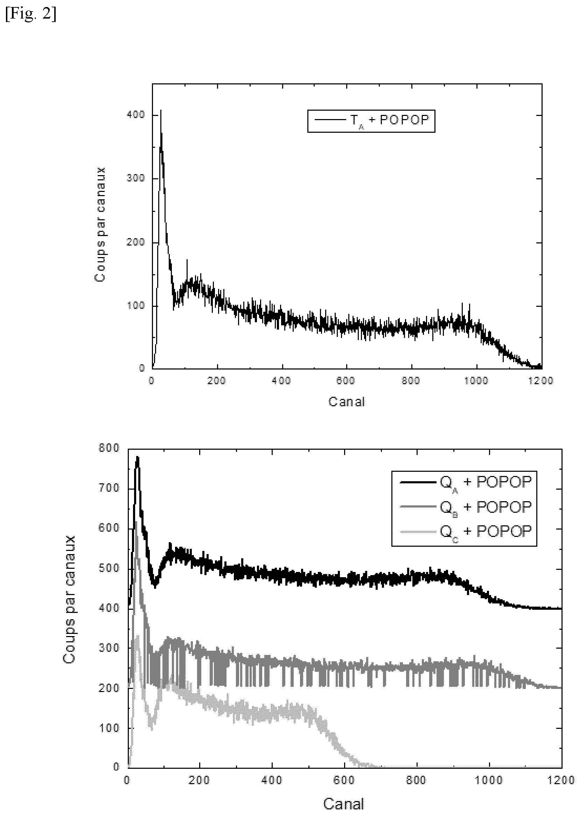

Des mélanges T_{A}+POPOP, Q_{A}+POPOP, Q_{B}+POPOP, et Q_{C}+POPOP ont également été étudiés avec succès (figure 2).

### Exemple 3 : Comparaison des compositions selon l'invention en tant que scintillateurs liquides avec une référence commerciale hors invention

Les mélanges T_{A}+POPOP et Q_{A}+POPOP de l'exemple 2 ont été comparés en tant que scintillateurs liquides avec une référence commerciale hors invention (BC501A). Les mélanges T_{A}, Q_{A}, Q_{B}, et Q_{C} ont notamment été exposés comme suit :
Les spectres d'aires ont été réalisés comme précédemment.

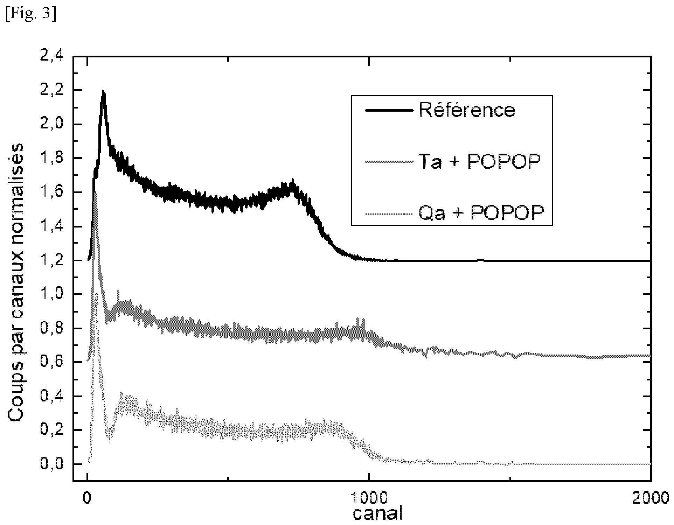

La figure 3 montre que les compositions de l'invention sont au moins équivalentes, voire plus efficaces, que le scintillateur commercial.

## Revendications

1. Composition constituée de ou comprenant au moins deux composés choisis parmi :
- Les di-tert-butyl-benzènes;
- Les biphényles et terphényles, optionnellement substitués par deux groupes choisis indépendamment parmi les alkyles linéaires ou branchés en C₁ à C₆ ;
- Les hydrocarbures aromatiques polycycliques choisis parmi naphtalènes, acénaphtènes, anthracènes, pyrènes, lesquels sont optionnellement substitués par deux groupes choisis indépendamment parmi les alkyles linéaires ou branchés en C₁ à C₆ ;
- Les fluorènes et carbazoles, lesquels sont optionnellement substitués par deux ou quatre groupes choisis indépendamment parmi les alkyles linéaires ou branchés en C₁ à C₆ ;
- Les 2,5-diphenyloxazoles, optionnellement substitués par deux groupes choisis indépendamment parmi les alkyles linéaires ou branchés en C₁ à C₆ ;
- Les composés de formule (I) : 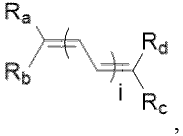 dans laquelle :
i est égal à 0 ou 1 ;
Rₐ, R_{b}, R_{c} et R_{d} sont indépendamment choisis parmi H et phényle, au moins deux des groupes Rₐ, R_{b}, R_{c} et R_{d} étant un phényle ;
lesdits composés de formule (I) étant optionnellement substitués, en particulier sur les groupes phényle, par deux groupes choisis indépendamment parmi les alkyles linéaires ou branchés en C₁ à C₆ ;
ladite composition n'étant pas constituée de biphényle et naphtalène.

2. Composition selon la revendication 1, laquelle est eutectique.

3. Composition selon la revendication 1 ou 2, dans laquelle les au moins deux composés sont notamment choisis parmi les composés suivants : 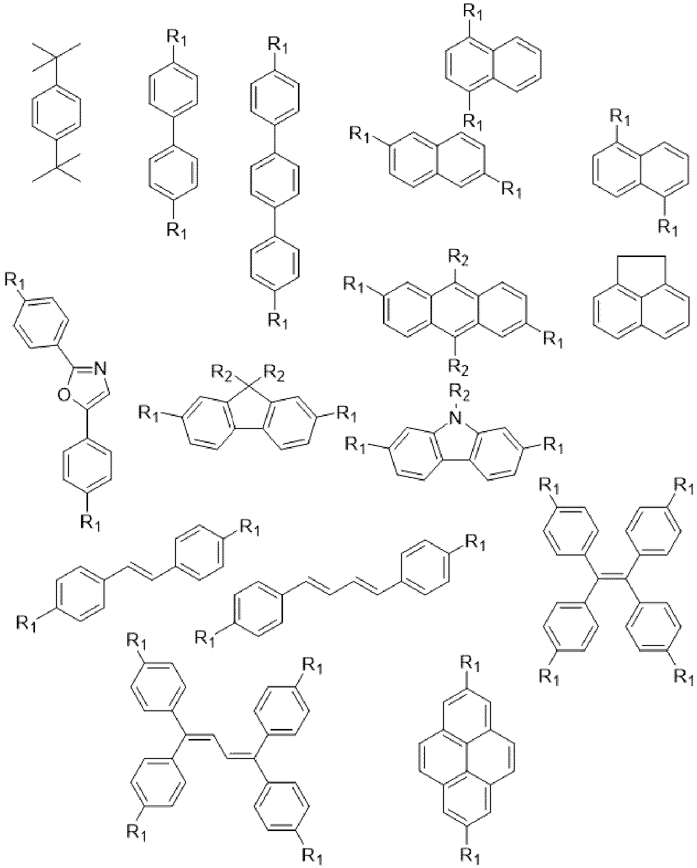
dans lesquelles R₁ et R₂ sont choisis indépendamment d'un composé à l'autre,
R₁ étant choisi parmi H et les alkyles linéaires ou branchés en C₁ à C₆, et R₂ étant choisi parmi H et les alkyles linéaires ou branchés en C₁ à C₆.

4. Composition selon l'une quelconque des revendications précédentes, laquelle est binaire, tertiaire, quaternaire, ou quinquénaire.

5. Composition selon l'une quelconque des revendications précédentes, laquelle est :
- binaire, et les deux composés de ladite composition sont présents dans celle-ci à hauteur de 20 à 80 %molaire, en particulier à hauteur de 40 à 60 %molaire ;
- tertiaire, et les trois composés de ladite composition sont présents dans celle-ci à hauteur de 10 à 55 %molaire, en particulier à hauteur de 25 à 40 %molaire ;
- quaternaire, et les quatre composés de ladite composition sont présents dans celle-ci à hauteur de 5 à 45 %molaire, en particulier à hauteur de 22 à 40 %molaire pour trois d'entre eux, et à hauteur de 6 à 34 %molaire pour le dernier ; ou
- quinquénaire, et les cinq composés de ladite composition sont présents dans celle-ci à hauteur de 5 à 45 %molaire.

6. Composition selon l'une quelconque des revendications précédentes, constituée de ou comprenant les au moins deux composés, et en sus au moins un composé décaleur de longueurs d'ondes.

7. Utilisation d'une composition pour la scintillation liquide, ladite composition étant constituée de ou comprenant au moins deux composés choisis parmi :
- Les di-tert-butyl-benzènes;
- Les biphényles et terphényles, optionnellement substitués par deux groupes choisis indépendamment parmi les alkyles linéaires ou branchés en C₁ à C₆ ;
- Les hydrocarbures aromatiques polycycliques choisis parmi naphtalènes, acénaphtènes, anthracènes, pyrènes, lesquels sont optionnellement substitués par deux groupes choisis indépendamment parmi les alkyles linéaires ou branchés en C₁ à C₆ ;
- Les fluorènes et carbazoles, lesquels sont optionnellement substitués par au moins deux groupes choisis indépendamment parmi les alkyles linéaires ou branchés en C₁ à C₆ ;
- Les 2,5-diphenyloxazoles, optionnellement substitués par deux groupes choisis indépendamment parmi les alkyles linéaires ou branchés en C₁ à C₆ ;
- Les composés de formule (I) : 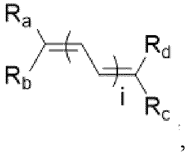 dans laquelle :
i est égal à 0 ou 1 ;
Rₐ, R_{b}, R_{c} et R_{d} sont indépendamment choisis parmi H et phényle, au moins deux des groupes Rₐ, R_{b}, R_{c} et R_{d} étant un phényle ;
lesdits composés de formule (I) étant optionnellement substitués, en particulier sur les groupes phényle, par deux groupes choisis indépendamment parmi les alkyles linéaires ou branchés en C₁ à C₆.

8. Utilisation selon la revendication 7 de ladite composition en tant que scintillateur liquide.

9. Utilisation selon la revendication 7 ou 8, dans laquelle ladite composition est constituée de ou comprenant les au moins deux composés, et en sus au moins un composé décaleur de longueurs d'ondes.

10. Utilisation selon l'une quelconque des revendications 7 à 9, dans laquelle ladite composition est dénuée de solvant, le solvant étant différent de tous les composés définis à la revendication 1 et de leurs mélanges.
